# DEMANDE DE BREVET EUROPEEN

(11) **EP 3 653 898 A1**
(43) Date de publication de la demande: **20.05.2020**
(21) Numéro de dépôt: 19204690.2
(22) Date de dépôt: 22.10.2019
(51) Int. Cl.: F16D 25/0638

(54) **ENSEMBLE DE PLAQUE D'ANNULATION D'UN EMBRAYAGE HYDRAULIQUE, ET EMBRAYAGE HYDRAULIQUE COMPRENANT UN TEL ENSEMBLE**

(30) Priorité: 16.11.2018 FR 1860617
(71) Demandeur: HUTCHINSON, 75008 Paris (FR)
(72) Inventeur: LEPAGE, Dominique, 49220 Le Lion d'Angers (FR)
(74) Mandataire: Plasseraud IP

(57) **Abrégé**

Ensemble de plaque d'annulation (30) d'un embrayage comprenant une plaque d'annulation (10) et un joint interne (22) adapté pour assurer une étanchéité entre la plaque d'annulation et un arbre (2) de l'embrayage. L'ensemble comprend un élément d'étanchéité (20) comprenant une armature (21) et le joint interne (22), le joint interne étant fixé sur l'armature, et l'élément d'étanchéité est une pièce distincte de la plaque d'annulation qui est monté de manière fixe par son armature, et l'armature est adaptée pour venir contre une butée (7) de l'arbre.

## Description

### DOMAINE TECHNIQUE

La présente invention est relative aux embrayages hydrauliques.

### ETAT DE LA TECHNIQUE ANTERIEURE

Plus particulièrement, l'invention concerne un ensemble de plaque d'annulation d'un embrayage hydraulique, comprenant :
- une plaque d'annulation qui délimite une première chambre hydraulique entre la plaque d'annulation et un piston de l'embrayage, et
- un joint interne adapté pour assurer une étanchéité entre la plaque d'annulation et un arbre de l'embrayage.

Habituellement, le joint interne de la plaque d'annulation est un joint torique monté dans une gorge de l'arbre.

L'arbre doit disposer d'une gorge pour accueillir ce joint torique. Le joint doit être monté sur l'arbre avant le montage de la plaque d'annulation.

La plaque d'annulation est en contact avec une butée de l'arbre : un anneau élastique également monté dans une gorge de l'arbre pour positionner la plaque d'annulation dans une direction axiale de l'embrayage hydraulique.

### EXPOSE DE L'INVENTION

La présente invention a pour but d'améliorer le montage du joint interne de la plaque d'annulation de l'embrayage hydraulique.

A cet effet, l'invention se rapporte à **un ensemble de plaque d'annulation** du type précité est **caractérisée en ce qu**'il comprend en outre un élément d'étanchéité comprenant une armature et le joint interne, le joint interne étant fixé sur ladite armature, et **en ce que :**
- l'élément d'étanchéité est une pièce distincte de la plaque d'annulation et est fixé par son armature à une extrémité de la plaque d'annulation à proximité de l'arbre de l'embrayage,
- l'armature est adaptée pour venir contre une butée de l'arbre pour positionner l'ensemble de plaque d'annulation dans une direction axiale de l'embrayage.

Grâce à ces dispositions, la gorge de l'arbre destinée au joint interne de la plaque d'annulation n'est plus nécessaire.

En outre, le joint interne fait partie d'une pièce, l'élément d'étanchéité, qui peut être montée fixement sur la plaque d'annulation pour former un ensemble de plaque d'annulation qui est peut être facilement livré séparément de l'embrayage et être facilement monté sur l'arbre de l'embrayage.

En outre, l'élément d'étanchéité est une pièce de taille plus réduite que la plaque d'annulation, ce qui facilite la fixation du joint interne sur l'armature de l'élément d'étanchéité, notamment dans le cas d'une adhérisation et surmoulage du joint interne sur l'armature.

En outre, le matériau et le procédé de fabrication de la plaque d'annulation peuvent être différents de ceux de l'armature de l'élément d'étanchéité. Notamment, il est possible d'optimiser la forme de la plaque d'annulation et d'optimiser son matériau, et de réduire son poids.

En outre, l'armature peut avoir plus facilement une forme et un matériau (e.g. la rigidité dudit matériau) adapté à la butée qui positionne l'ensemble d'annulation dans la direction axiale.

Dans divers modes de réalisation de l'ensemble de plaque d'annulation selon l'invention, on peut éventuellement avoir recours en outre à l'une et/ou à l'autre des dispositions suivantes.

Selon un aspect, la plaque d'annulation est composée d'un matériau d'une rigidité inférieure à la rigidité du matériau de l'armature.

Selon un aspect, la rigidité du matériau de la plaque d'annulation est au moins cinq fois inférieure à la rigidité du matériau de l'armature.

Selon un aspect, la plaque d'annulation est composée d'un matériau polymère.

Selon un aspect, l'armature est composée d'un matériau rigide

Selon un aspect, le matériau rigide a une rigidité supérieure à 200 GPa.

Selon un aspect, le matériau rigide est métallique.

Selon un aspect, le joint interne est fixé sur l'armature par adhérisation et surmoulage d'un élastomère sur ladite armature.

Selon un aspect, l'élément d'étanchéité est fixé à la plaque d'annulation par emmanchement sur un diamètre externe ou interne de ladite plaque d'annulation.

Selon un aspect, l'armature comprend au moins une projection dans la direction axiale pour que la butée en contact avec l'armature soit sous ladite projection dans une direction radiale sensiblement perpendiculairement à la direction axiale.

Selon un aspect, l'armature comprend :
- un première paroi qui s'étend radialement et sensiblement perpendiculairement à la direction axiale, depuis une extrémité de l'armature à proximité de l'arbre,
   le joint interne s'étendant dans la direction axiale depuis la première paroi,
- une zone coudée dans le prolongement de la première paroi, pour former un escalier dans la direction axiale,
- une deuxième paroi dans le prolongement de la zone coudée et qui s'étend radialement, la deuxième paroi étant décalé dans la direction axiale de la première paroi par la zone coudée, et
- une troisième paroi de forme cylindrique qui s'étend dans la direction axiale dans une direction opposée à la zone coudée,
la troisième paroi étant adaptée pour fixer l'armature sur la plaque d'annulation.

Selon un aspect, l'armature comprend :
- un première paroi qui s'étend radialement et sensiblement perpendiculairement à la direction axiale, depuis une extrémité de l'armature à proximité de l'arbre,
   le joint interne s'étendant dans la direction axiale depuis la première paroi, et
- une troisième paroi de forme cylindrique qui s'étend dans le prolongement de la première paroi dans la direction axiale,
la troisième paroi étant adaptée pour fixer l'armature sur la plaque d'annulation.

Selon un aspect, la plaque d'annulation est insérée par une extrémité entre la troisième paroi et le joint interne pour que la troisième paroi soit fixée à l'armature sur un diamètre externe de la plaque d'annulation.

Selon un aspect, l'armature comprend :
- une première paroi qui s'étend radialement et sensiblement perpendiculairement à la direction axiale, depuis une extrémité de l'armature à proximité de l'arbre,
- une deuxième paroi dans le prolongement de la première paroi et qui s'étend radialement et parallèlement à la première paroi, et
- une troisième paroi de forme cylindrique qui s'étend dans la direction axiale depuis un point d'intersection entre la première paroi et la deuxième paroi,
la troisième paroi étant adaptée pour fixer l'armature sur un diamètre interne de la plaque d'annulation.

Selon un aspect, le joint interne est fixé sur la première paroi et la troisième paroi.

L'invention se rapporte également à **un embrayage hydraulique** comprenant :
- un arbre de l'embrayage s'étendant dans une direction axiale et comprenant une butée,
- une cloche entourant partiellement l'arbre de l'embrayage,
- un piston monté sur l'arbre de l'embrayage et logé dans la cloche, ledit piston délimitant une seconde chambre hydraulique entre le piston et la cloche, ledit piston étant adapté pour commander l'embrayage,
- un ensemble de plaque d'annulation tel que explicité ci-dessus, ledit ensemble de plaque d'annulation étant monté sur l'arbre en opposition audit piston et contre la butée pour positionner l'ensemble de plaque d'annulation dans la direction axiale.

Dans divers modes de réalisation de l'embrayage hydraulique selon l'invention, on peut éventuellement avoir recours en outre à l'une et/ou à l'autre des dispositions suivantes.

Selon un aspect, la butée est un anneau élastique monté dans une gorge de l'arbre.

### BREVE DESCRIPTION DES DESSINS

D'autres caractéristiques et avantages de l'invention apparaîtront au cours de la description suivante d'un de ses modes de réalisation, donné à titre d'exemple non limitatif, en regard des dessins joints.

Sur les dessins :
- la figure 1 est une vue en coupe d'un embrayage comprenant un premier mode de réalisation de l'ensemble de plaque d'annulation selon l'invention ;
- la figure 2 est une vue agrandie de l'élément d'étanchéité de la figure 1,
- la figure 3 est une vue en perspective de la figure 3,
- la figure 4 est une vue agrandie d'un élément d'étanchéité d'un deuxième mode de réalisation de l'ensemble de plaque d'annulation selon l'invention,
- la figure 5 est une vue en perspective de la figure 4,
- la figure 6 est une vue agrandie d'un élément d'étanchéité d'un troisième mode de réalisation de l'ensemble de plaque d'annulation selon l'invention,
- la figure 7a est une première variante de l'élément d'étanchéité de la figure 6, et
- la figure 7b est une deuxième variante de l'élément d'étanchéité de la figure 6.

Sur les différentes figures, les mêmes références numériques désignent des éléments identiques ou similaires.

L'embrayage s'étend principalement autour d'un axe ou direction axiale AX. On désigne par « radial » une direction sensiblement perpendiculaire à la direction axiale AX et par « axial » une direction sensiblement parallèle à la direction axiale AX.

### DESCRIPTION DETAILLEE

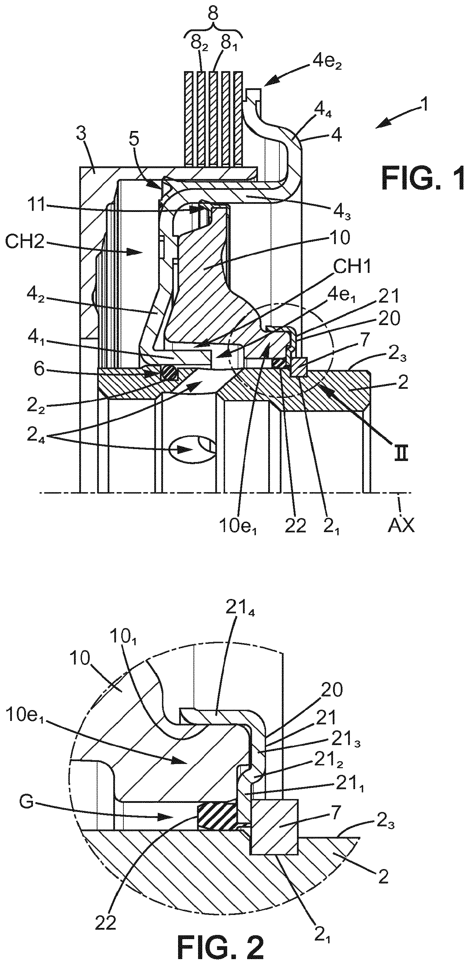

La **figure 1** est une vue en coupe d'une portion d'un embrayage hydraulique 1 qui comprend :
- un arbre d'embrayage 2 s'étendant dans une direction axiale AX et comprenant une butée 7,
- une cloche 3 entourant partiellement l'arbre d'embrayage 2,
- un piston 4 monté sur l'arbre d'embrayage 2 et logé dans la cloche 3,
- une plaque d'annulation 10 montée sur l'arbre d'embrayage 2 en opposition au piston 4 et montée contre la butée 7.

Ainsi, le piston 4 est situé dans la direction axiale AX entre la cloche 3 et la plaque d'annulation 10.

Tous ces éléments de l'embrayage hydraulique sont bien évidemment de forme annulaire et entourent l'arbre 2 (arbre d'embrayage).

Ce type d'embrayage hydraulique est par exemple utilisé dans une boite de transmission automatique d'un moteur de véhicule.

La plaque d'annulation 10 délimite une première chambre hydraulique CH1 entre la plaque d'annulation 10 et le piston 4 de commande de l'embrayage.

La plaque d'annulation 10 est un élément de forme annulaire. Cependant, cette plaque d'annulation peut être mais n'est pas obligatoirement un élément du type d'une tôle plane ou d'une tôle déformée. Cette plaque d'annulation est un élément annulaire faisant office de paroi fixe de la première chambre hydraulique CH1. Elle peut être de toute forme plus ou moins complexe, comme représenté sur la figure 1. Notamment, elle peut être une pièce moulée.

La plaque d'annulation 10 est pourvue de premiers moyens d'étanchéité pour que la plaque d'annulation 10 soit un élément étanche vis-à-vis de la première chambre hydraulique CH1. Les premiers moyens d'étanchéité comprennent par exemple un joint externe 11 et un joint interne 22.

Par exemple, comme représenté sur la figure, le joint externe 11 est directement surmoulé sur une portion cylindrique externe de la plaque d'annulation 10 pour rendre étanche un espace entre la plaque d'annulation 10 et le piston 4.

Le joint interne 22 rend étanche un espace entre la plaque d'annulation 10 et l'arbre 2. Les caractéristiques de mise en œuvre ce joint interne 22 correspondent à la présente invention et seront explicitées en détail peu après.

L'arbre d'embrayage 2 comprend une surface externe 2₃ de forme cylindrique, dans laquelle est formée une première gorge 2₁. La butée 7 est installée dans la première gorge 2₁. Cette butée 7 est par exemple un anneau élastique. Succinctement, un tel anneau élastique est habituellement un anneau fendu réalisé en un métal de grande élasticité. Les extrémités de cet anneau sont élastiquement écartées pour le montage dans une gorge et former ainsi une butée ou épaulement démontable sur un cylindre. La butée 7 bloque la plaque d'annulation en translation selon la direction axiale AX.

Le piston 4 est monté sur l'arbre d'embrayage 2. Il est à l'intérieur de la cloche 3 et il est mobile en translation sur l'arbre 2 dans la direction axiale AX.

Ce piston 4 délimite une seconde chambre hydraulique CH2 située entre le piston 4 et la cloche 3.

L'arbre d'embrayage 2 et/ou la cloche 3 et/ou le piston 4 sont pourvus de seconds moyens d'étanchéité pour que le piston 4 soit un élément étanche vis-à-vis de la seconde chambre hydraulique CH2. Les seconds moyens d'étanchéité comprennent par exemple un joint externe 5 et un joint interne 6.

Par exemple, comme représenté sur la figure, le joint externe 5 est directement surmoulé sur une portion cylindrique externe du piston 4 pour rendre étanche un espace entre le piston 4 et la cloche 3.

Le joint interne 6 est par exemple un joint torique logé dans une seconde gorge 2₂ de l'arbre 2 pour rendre étanche l'espace entre le piston 4 et l'arbre 2.

Le piston 4 a une forme adapté pour avoir une première extrémité 4e₁ à proximité de l'arbre 2 et une seconde extrémité 4e₂ à distance de l'arbre 2.

Notamment, le piston 4 comprend par exemple :
- une première portion cylindrique 4₁ située à la première extrémité 4e₁, cette première portion cylindrique étant montée en coulissement sur l'arbre 2,
- une première portion radiale 4₂ s'étendant radialement en éloignement depuis la première portion cylindrique et s'étendant sensiblement perpendiculairement par rapport à la direction axiale,
- une seconde portion cylindrique 4₃ située dans le prolongement de la première portion radiale, et
- une seconde portion radiale 4₄ dans le prolongement de la seconde portion cylindrique, et s'étendant radialement en éloignement depuis la seconde portion cylindrique et s'étendant sensiblement perpendiculairement par rapport à la direction axiale, jusqu'à la seconde extrémité 4e₂.

Ainsi, le piston 4 à une forme générale de « S » qui serpente depuis la première portion cylindrique 4₁ à proximité de l'arbre 2, entre la cloche 3 et la plaque d'annulation 10 pour finir par la seconde portion radiale 4₄. Ainsi, le piston s'étend de l'intérieur des première et seconde chambres hydrauliques CH1, CH2 jusqu'à l'extérieur desdites chambres, et les joints externes 5 et 11 permettent de rendre étanche ces chambres vis-à-vis du passage du piston 4 entre la cloche 3 et la plaque d'annulation 10.

L'arbre 2 est percé radialement d'un ou plusieurs trous latéraux 2₄ adaptés pour alimenter en fluide hydraulique et en pression hydraulique la première chambre hydraulique CH1, et pour pousser le piston 4 dans la direction axiale AX vers la cloche 3. La seconde chambre hydraulique CH2 comprend un ressort élastique (non représenté) positionné entre la cloche 3 et le piston 4, ce ressort élastique étant dans un état comprimé approprié pour s'opposer au déplacement du piston 4 vers la cloche 3, c'est-à-dire en opposition de la pression hydraulique de la première chambre hydraulique CH1.

Alternativement, l'alimentation en pression hydraulique est effectuée dans la seconde chambre hydraulique CH2 entre la cloche 3 et le piston 4, et le ressort élastique est placé dans la première chambre hydraulique CH1 entre le piston 4 et la plaque d'annulation 10. La commande hydraulique du piston 4 fonctionnera alors de manière identique à la position inverse de la pression hydraulique et du ressort hydraulique.

L'embrayage hydraulique 1 comprend également un empilement de disques d'embrayages 8 qui comprend alternativement des disques d'entraînements 8₁ fixés à la cloche 3 et des disques entrainés 8₂ fixés à un moyeu (non représenté).

Le piston 4 est commandé en déplacement par la pression hydraulique de la première chambre hydraulique CH1. La seconde extrémité 4e₂ du piston 4 comprend une portion d'appui qui vient en contact contre les disques d'embrayage 8 et qui déplace des disques d'entraînements 8₁ vers des disques entrainés 8₂ pour augmenter une force de friction entre lesdits disques jusqu'à un entrainement total des disques entrainées par les disques d'entraînement, ce qui correspond un accouplement de ces disques d'embrayage 8, la transmission de puissance entre ces disques et la rotation des disques entrainés par les disques d'entraînement. La baisse ou suppression de la pression hydraulique dans la première chambre CH1 déplace le piston 4 vers la plaque d'annulation 10 par l'action du ressort élastique de rappel, et le désaccouplement des disques d'embrayage 8 et donc la suppression de la transmission de puissance et de la rotation des disques entrainés 8₂.

Le piston 4 commande ainsi le fonctionnement de l'embrayage 10 pour accoupler ou désaccoupler des disques d'embrayages, c'est-à-dire pour accoupler ou désaccoupler la cloche du moyeu.

On définit alors un ensemble de plaque d'annulation 30, cet ensemble comprenant au moins la plaque d'annulation 10 et le joint interne 22 de la plaque d'annulation.

L'ensemble de plaque d'annulation 30 selon l'invention est construit avec deux pièces distinctes :
- la plaque d'annulation 10, et
- un élément d'étanchéité 20 qui est monté sur la plaque d'annulation 10 pour en être solidaire. L'élément d'étanchéité 20 est donc fixé sur la plaque d'annulation par tout moyen.

L'élément d'étanchéité 20 comprend lui-même :
- une armature 21, et
- le joint interne 22, ce joint interne étant fixé sur ladite armature 21.

L'armature 21 et le joint interne 22 sont des éléments annulaires qui entourent l'arbre 2.

L'armature 21 est avantageusement un élément rigide qui est adapté pour effectuer la solidarisation de l'élément d'étanchéité 20, par exemple à une extrémité de la plaque d'annulation 10 à proximité de l'arbre 2 de l'embrayage, et qui est adapté pour venir contre la butée 7 de l'arbre 2 afin de positionner l'ensemble de plaque d'annulation 30 (i.e. la plaque d'annulation) dans la direction axiale AX.

Grâce à ces dispositions de l'élément d'étanchéité :
- on supprime la gorge de l'arbre 2 utile pour accueillir le joint torique de l'art antérieur,
- la taille réduite de l'armature 21 par rapport à la plaque d'annulation 10 facilite la fixation du joint interne 22 sur l'armature 21.

Le joint interne 22 est avantageusement un élément souple et déformable adapté pour former une étanchéité entre la plaque d'annulation 10 et l'arbre 2. Ce joint interne 22 est par exemple directement surmoulé sur l'armature 21, par exemple par un procédé d'adhésion ou d'adhérisation du joint interne 22 sur l'armature 21.

Notamment, la taille réduite de l'armature 21 facilité la fixation par surmoulage : cela évite de mettre la plaque d'annulation 10 dans un moule et cela réduit les besoins de chauffage du moule car seule l'armature 21 est introduite dans le moule avant surmoulage du joint interne 22 sur l'armature.

Le joint interne 22 est par exemple constitué d'un matériau polymère élastique, tel qu'un élastomère naturel ou synthétique.

L'armature 21 est composée d'un matériau rigide. Sa rigidité est par exemple caractérisée par le module d'Young du matériau. Ce module d'Young est par exemple supérieur à 200 GPa.

Notamment, le matériau rigide est éventuellement un matériau métallique, tel que de l'acier.

Ainsi, la plaque d'annulation 10 peut être composée d'un matériau d'une rigidité inférieure à la rigidité du matériau de l'armature 21 de l'élément d'étanchéité 20. En effet, l'armature 21 est en contact avec la butée 7 et stabilise la position de la plaque d'annulation 10. La plaque d'annulation 10 qui est seulement soumise à la pression hydraulique peut être constituée d'un matériau moins rigide que celui de l'armature.

Par exemple, la rigidité du matériau de la plaque d'annulation 10 est au moins cinq fois inférieure à la rigidité du matériau de l'armature 21, et éventuellement dix fois inférieure à celle de l'armature 21.

Par exemple, la rigidité du matériau de la plaque d'annulation 10 est par exemple caractérisée par un module d'Young inférieur à 40 GPa.

Grâce à la rigidité du matériau de l'armature 21, l'élément d'étanchéité 20 résiste bien au contact avec la butée 7 et fait l'interface entre la butée et la plaque d'annulation 10.

Ainsi, le matériau de la plaque d'annulation 10 est avantageusement différent de celui de l'armature 21 de l'élément d'étanchéité 20, notamment par au moins une caractéristique mécanique.

Ladite caractéristique mécanique du matériau est par exemple la rigidité telle que cela est explicité ci-dessus et/ou la résistance en compression et/ou la résistance à l'usure.

De même que pour la rigidité, le matériau de la plaque d'annulation 10 peut voir une résistance en compression inférieure à la résistance en compression de l'armature 21. La résistance en compression est par exemple caractérisée par la contrainte de compression uniaxiale maximum atteinte à la rupture complète du matériau lors d'un essai de compression.

Notamment, il est possible d'envisager de réaliser la plaque d'annulation 10 à l'aide d'un matériau polymère, tel que du plastique, et donc par un procédé de moulage de pièce plastique, ce qui en réduit la masse et le coût.

L'élément d'étanchéité 30 peut alors être fixé à la plaque d'annulation 10 par emmanchement de l'armature 21 sur un diamètre externe 10₁ ou interne 10₂ de ladite plaque d'annulation 10.

L'armature 21 peut avoir de multiples formes telles que représentées sur les figures.

Selon un premier mode de réalisation des **figures 1 à 3****,** l'armature 21 comprend :
- un première paroi 21₁ qui s'étend radialement et sensiblement perpendiculairement à la direction axiale AX, depuis une extrémité de l'armature 21 à proximité de l'arbre 2,
- une zone coudée 21₂ dans le prolongement de la première paroi 211, cette zone coudée ayant par exemple une première courbure dans une première direction suivie d'une seconde courbure dans une seconde direction opposée à la première direction, pour former un escalier dans la direction axiale AX,

- une deuxième paroi 21₃ dans le prolongement de la zone coudée 21₂ et qui s'étend radialement et sensiblement perpendiculairement à la direction axiale AX, la deuxième paroi 21₃ étant alors décalé dans la direction axiale de la première paroi 21₁ par la zone coudée, et
- une troisième paroi 21₄ de forme cylindrique qui s'étend dans la direction axiale dans une direction opposée à la zone coudée 21₂.

La deuxième paroi 21₃ forme ainsi une projection dans la direction axiale qui est adaptée pour être située radialement au-dessus de la butée 7 afin d'éviter que ladite butée 7 puisse sortir de la gorge 2₁ de l'arbre 2.

La première paroi 21₁ comprend :
- une première face en contact avec la butée 7, et
- une seconde face à l'opposé de la première face en direction axiale AX, et sur laquelle le joint interne 22 est fixé.

Le joint interne 22 s'étend alors en direction axiale AX depuis la première paroi 21₁ à l'opposé de la butée 7.

Le joint interne 22 se positionne au montage de l'ensemble de plaque d'annulation 30 sous la plaque d'annulation 10, puis il se positionne au montage de l'ensemble sur l'arbre 2, dans l'espace G entre la plaque d'annulation 10 et l'arbre 2.

La troisième paroi 21₄ comprend une portée cylindrique interne qui vient en emmanchement sur un diamètre externe 10₁ de l'extrémité 10e₁ la plaque d'annulation 10. Cet emmanchement est un emmanchement à force qui solidarise l'élément d'étanchéité 20 sur la plaque d'annulation 10 pour former l'ensemble de plaque d'annulation 30.

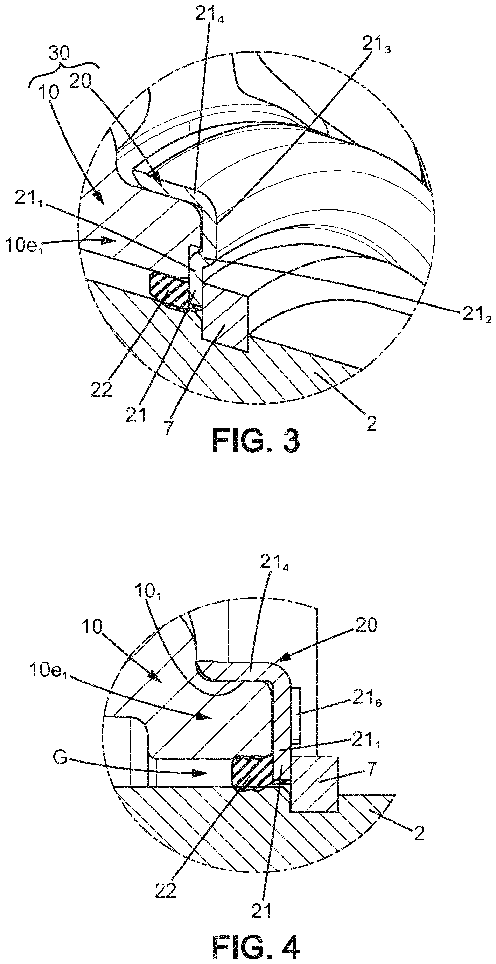

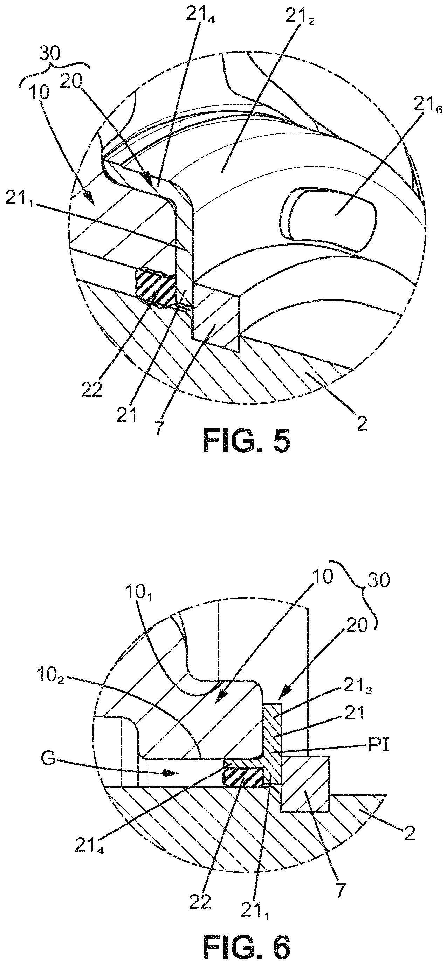

Selon un deuxième mode de réalisation des **figures 4** **et** **5****,** l'armature 21 diffère du premier mode de réalisation en ce qu'elle ne comprend de zone coudée 21₂. Elle comprend :
- une première paroi 21₁ qui s'étend radialement et sensiblement perpendiculairement à la direction axiale AX, depuis une extrémité de l'armature 21 à proximité de l'arbre 2, et
- une troisième paroi 21₄ de forme cylindrique dans le prolongement de la première paroi 21₁ et qui s'étend dans la direction axiale AX.

La première paroi 21₁ est par exemple pourvu d'une ou plusieurs projections axiales 21₆ qui s'étendent dans la direction axiale et qui sont adaptées pour être situées radialement au-dessus de la butée 7 afin d'éviter que ladite butée 7 puisse sortir de la gorge 2₁ de l'arbre 2. Ces projections axiales 21₆ sont offrent une fonction équivalente de la deuxième paroi 21₃ du premier mode de réalisation.

Les projections axiales 21₆ peuvent avoir de multiples formes, telles qu'une forme oblongue en arc de cercle, comme cela est visible en figure 5. Ces projections axiales 21₆ sont avantageusement formées sur l'armature, par exemple par déformation plastique ou emboutissage, ou un autre procédé de fabrication. Elles sont de préférence venues de matière avec le reste de l'armature pour offrir une grande résistance, et éviter que la butée 7 puisse sortir de la gorge 2₁.

La première paroi 21₁ a les mêmes dispositions que dans le premier mode de réalisation. Le joint interne 22 s'étend alors en direction axiale AX depuis la première paroi 21₁ à l'opposé de la butée 7, et se positionne au montage de la même façon.

De même, la troisième paroi 21₄ comprend une portée cylindrique interne qui vient en emmanchement sur un diamètre externe 10₁ de l'extrémité 10e₁ de la plaque d'annulation, pour solidariser l'élément d'étanchéité 20 sur la plaque d'annulation 10 et pour former l'ensemble de plaque d'annulation 30.

Dans les premier et deuxième modes de réalisation, l'extrémité 10^{e}1 de la plaque d'annulation est insérée entre la troisième paroi 21₄ de l'armature 21 et le joint interne 22.

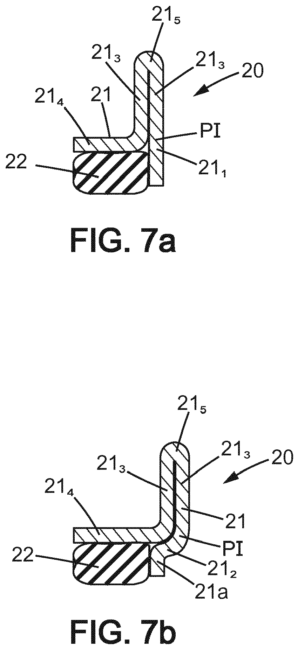

Selon un troisième mode de réalisation des **figures 6 à 7b****,** l'armature 21 diffère du premier mode de réalisation en ce qu'elle a une forme générale en « T couché », donc une forme à trois branches. Elle comprend :
- une première paroi 21₁ qui s'étend radialement et sensiblement perpendiculairement à la direction axiale AX, depuis une extrémité de l'armature 21 à proximité de l'arbre 2,
- une deuxième paroi 21₃ dans le prolongement de la première paroi 21₁ et qui s'étend radialement et sensiblement perpendiculairement à la direction axiale AX, la deuxième paroi 21₃ étant par exemple coplanaire à la première paroi, comme en **figures 6****,** ou décalée dans la direction axiale de la première paroi 21₁ comme en **figures 7a et 7b****,** et
- une troisième paroi 21₄ de forme cylindrique dans le prolongement de l'extrémité finale de la première paroi 21₁ et/ou dans le prolongement l'extrémité initiale de la deuxième paroi 21₃, et qui s'étend dans la direction axiale.

La deuxième paroi 21₃ s'étant parallèlement à la première paroi 21₁.

L'armature 21 de la figure 6 est annulaire et en forme de « T couché » (en section) dont la première paroi 21₁, la deuxième paroi 21₃ et la troisième paroi 21₄ forment les trois branches qui se joignent à un même point d'intersection PI.

Cette armature 21 peut être formée par usinage ou déformation d'un anneau.

De plus, une ou plusieurs projections (non représentées) dans la direction axiale AX peuvent être formées dans la deuxième paroi 21₃ de l'armature 21, ces projections étant adaptées pour être situées radialement au-dessus de la butée 7 afin d'éviter que ladite butée 7 puisse sortir de la gorge 2₁ de l'arbre 2.

La troisième paroi 21₄ comprend une portée cylindrique externe qui vient en emmanchement sur un diamètre interne 10₂ de l'extrémité 10e₁ de la plaque d'annulation 10. Cet emmanchement est un emmanchement à force qui solidarise l'élément d'étanchéité 20 sur la plaque d'annulation 10 pour former l'ensemble de plaque d'annulation 30.

Le joint interne 22 s'étend alors en direction axiale AX depuis la première paroi 21₁ à l'opposé de la butée 7. Il peut être fixé par les moyens cités précédemment à la première paroi 21₁ de l'armature et/ou à la troisième paroi 21₄ de l'armature.

Avantageusement, le joint interne 22 sera fixé aux deux, ce qui le rend plus résistant et ce qui rend le montage de l'élément d'étanchéité 20 plus facile sur la plaque d'annulation 10.

Le joint interne 22 se positionne au montage de l'ensemble de plaque d'annulation 30 sur l'arbre 2 entre la troisième paroi 21₄ de l'armature et l'arbre 2, c'est-à-dire dans l'espace G entre la plaque d'annulation 10 et l'arbre 2.

En outre, l'armature 21 de ce troisième mode de réalisation peut aussi être formée par déformation de plaque ou tôle, comme représenté en **figures 7a et 7b** tel que par emboutissage, notamment par des emboutissages successifs.

En **figure 7a****,** l'armature 21 a une deuxième paroi 21₃ dans le prolongement de la première paroi 21₁ et qui est replié sur elle-même au dos d'une première portion de la deuxième paroi 21₃, après une zone coudée 21₅ repliée à sensiblement 180°. La troisième paroi 21₄ s'étend alors dans le prolongement de la deuxième paroi 21₃ dans la direction axiale AX à l'opposé de la première paroi 21₁ (i.e. de la butée).

De plus, une ou plusieurs projections (non représentées) dans la direction axiale AX peuvent être formées dans la première portion de la deuxième paroi 21₃ de l'armature 21, ces projections étant adaptées pour être situées radialement au-dessus de la butée 7 afin d'éviter que ladite butée 7 puisse sortir de la gorge 2₁ de l'arbre 2.

Comme précédemment, le joint interne 22 peut être fixé par les moyens cités précédemment à la première paroi 21₁ de l'armature et/ou à la troisième paroi 21₄ de l'armature, et avantageusement aux deux pour plus de résistance.

Le joint interne 22 se positionne au montage de l'ensemble de plaque d'annulation 30 sur l'arbre 2 entre la troisième paroi 21₄ de l'armature et l'arbre 2, c'est-à-dire dans l'espace G entre la plaque d'annulation 10 et l'arbre 2.

En **figure 7b****,** la forme de l'armature de la figure 7a est complexifiée pour former une deuxième paroi 21₃ qui est décalée dans la direction axiale AX pour former une projection axiale adaptée pour être située radialement au-dessus de la butée 7 afin d'éviter que ladite butée 7 puisse sortir de la gorge 2₁ de l'arbre 2.

Pour ce faire, l'armature 21 comprend une première zone coudée 21₂ entre la première paroi 21₁ et la deuxième paroi 21₃, et une deuxième zone coudée 21₅ repliée à 180°. Comme précédemment, la deuxième paroi 21₃ dans le prolongement de la première paroi 21₁ est repliée sur elle-même au dos d'une première portion de la deuxième paroi 21₃.

Cette variante a alors les mêmes caractéristiques que la précédente.

## Revendications

1. **Ensemble de plaque d'annulation (30)** d'un embrayage hydraulique, comprenant :
- une plaque d'annulation (10) qui délimite une première chambre hydraulique entre la plaque d'annulation et un piston (4) de l'embrayage, et
- un joint interne (22) adapté pour assurer une étanchéité entre la plaque d'annulation et un arbre (2) de l'embrayage,
ledit ensemble étant **caractérisé en ce qu'il** comprend en outre un élément d'étanchéité (20) comprenant une armature (21) et le joint interne (22), le joint interne étant fixé sur ladite armature, et **en ce que** :
- l'élément d'étanchéité est une pièce distincte de la plaque d'annulation et est fixé par son armature à une extrémité de la plaque d'annulation à proximité de l'arbre de l'embrayage,
- l'armature est adaptée pour venir contre une butée (7) de l'arbre pour positionner l'ensemble de plaque d'annulation dans une direction axiale (AX) de l'embrayage.

2. Ensemble selon la revendication 1, dans lequel la plaque d'annulation (10) est composée d'un matériau d'une rigidité inférieure à la rigidité du matériau de l'armature.

3. Ensemble selon la revendication 2, dans lequel la rigidité du matériau de la plaque d'annulation est au moins cinq fois inférieure à la rigidité du matériau de l'armature.

4. Ensemble selon l'une des revendications 1 à 3, dans lequel la plaque d'annulation est composée d'un matériau polymère.

5. Ensemble selon l'une des revendications 1 à 4, dans lequel l'armature (21) est composée d'un matériau rigide.

6. Ensemble selon la revendication 5, dans lequel le matériau rigide a une rigidité supérieure à 200 GPa.

7. Ensemble selon la revendication 5 ou la revendication 6, dans lequel le matériau rigide est métallique.

8. Ensemble selon l'une des revendications 1 à 7, dans lequel le joint interne est fixé sur l'armature par adhérisation et surmoulage d'un élastomère sur ladite armature.

9. Ensemble selon l'une des revendications 1 à 8, dans lequel l'élément d'étanchéité est fixé à la plaque d'annulation par emmanchement sur un diamètre externe ou interne (10₁, 10₂) de ladite plaque d'annulation.

10. Ensemble selon l'une des revendications 1 à 9, dans lequel l'armature (21) comprend au moins une projection dans la direction axiale pour que la butée en contact avec l'armature soit sous ladite projection dans une direction radiale sensiblement perpendiculairement à la direction axiale.

11. Ensemble selon l'une des revendications 1 à 10, dans lequel l'armature (21) comprend :
- un première paroi (21₁) qui s'étend radialement et sensiblement perpendiculairement à la direction axiale (AX), depuis une extrémité de l'armature (21) à proximité de l'arbre (2),
le joint interne (22) s'étendant dans la direction axiale depuis la première paroi,
- une zone coudée (21₂) dans le prolongement de la première paroi, pour former un escalier dans la direction axiale,
- une deuxième paroi (21₃) dans le prolongement de la zone coudée et qui s'étend radialement, la deuxième paroi étant décalé dans la direction axiale de la première paroi par la zone coudée, et
- une troisième paroi (21₄) de forme cylindrique qui s'étend dans la direction axiale dans une direction opposée à la zone coudée,
la troisième paroi étant adaptée pour fixer l'armature sur la plaque d'annulation.

12. Ensemble selon l'une des revendications 1 à 10, dans lequel l'armature (21) comprend :
- un première paroi (21₁) qui s'étend radialement et sensiblement perpendiculairement à la direction axiale (AX), depuis une extrémité de l'armature (21) à proximité de l'arbre (2),
le joint interne (22) s'étendant dans la direction axiale depuis la première paroi, et
- une troisième paroi (21₄) de forme cylindrique qui s'étend dans le prolongement de la première paroi dans la direction axiale,
la troisième paroi étant adaptée pour fixer l'armature sur la plaque d'annulation.

13. Ensemble selon la revendication 11 ou la revendication 12, dans lequel la plaque d'annulation est insérée par une extrémité entre la troisième paroi et le joint interne (22) pour que la troisième paroi soit fixée à l'armature sur un diamètre externe (10₁) de la plaque d'annulation.

14. Ensemble selon l'une des revendications 1 à 10, dans lequel l'armature (21) comprend :
- une première paroi (21₁) qui s'étend radialement et sensiblement perpendiculairement à la direction axiale (AX), depuis une extrémité de l'armature (21) à proximité de l'arbre (2),
- une deuxième paroi (21₃) dans le prolongement de la première paroi et qui s'étend radialement et parallèlement à la première paroi, et
- une troisième paroi (21₄) de forme cylindrique qui s'étend dans la direction axiale depuis un point d'intersection entre la première paroi et la deuxième paroi,
la troisième paroi étant adaptée pour fixer l'armature sur un diamètre interne (10₂) de la plaque d'annulation.

15. Ensemble selon la revendication 14, dans lequel le joint interne (22) est fixé sur la première paroi et la troisième paroi.

16. **Embrayage hydraulique** comprenant :
- un arbre (2) de l'embrayage s'étendant dans une direction axiale (AX) et comprenant une butée (7),
- une cloche (3) entourant partiellement l'arbre de l'embrayage,
- un piston (4) monté sur l'arbre de l'embrayage et logé dans la cloche, ledit piston délimitant une seconde chambre hydraulique (CH2) entre le piston et la cloche, ledit piston étant adapté pour commander l'embrayage,
- un ensemble de plaque d'annulation (30) selon l'une des revendications 1 à 15, ledit ensemble de plaque d'annulation étant monté sur l'arbre en opposition audit piston et contre la butée pour positionner l'ensemble de plaque d'annulation dans la direction axiale.

17. L'embrayage selon la revendication 16, dans lequel la butée est un anneau élastique monté dans une gorge de l'arbre.
